# EUROPEAN PATENT APPLICATION

(11) **EP 2 692 873 A1**
(43) Date of publication of application: **05.02.2014**
(21) Application number: 12762777.6
(22) Date of filing: 06.03.2012
(51) Int. Cl.: C21C 5/28

(54) **METHOD FOR MANUFACTURING STAINLESS STEEL**

(30) Priority: 31.03.2011 JP 2011077909
(71) Applicant: Nisshin Steel Co., Ltd., Chiyoda-ku Tokyo 100-8366 (JP)
(72) Inventor: SUGIURA, Masayuki, Shunan-shi, Yamaguchi 746-8666 (JP); NAKAGAWA, Tomoki, Shunan-shi, Yamaguchi 746-8666 (JP)
(74) Representative: Geyer, Fehners & Partner
(86) International application number: PCT/JP2012/055696
(87) International publication number: WO 2012/132789

(57) **Abstract**

A method for manufacturing stainless steel according to the present invention includes the steps of: generating hot metal 2 through melting in a melting furnace 1 a starting material for making stainless steel; generating crude stainless molten steel 2a through decarburization of the hot metal 2 in a refining furnace 4; adding calcium carbonate 11 to slag 10 that is generated in the crude stainless molten steel 2a through the decarburization, without addition of a reducing agent, to solidify the slag 10; separating the solidified slag 10; and returning the separated slag 10 to the melting furnace 1.

## Description

### TECHNICAL FIELD

The present invention relates to a method for manufacturing stainless steel.

### BACKGROUND ART

In the manufacturing process of stainless steel, hot metal is produced through melting of starting materials, the produced hot metal is refined into molten steel such as through decarburization, in which carbon that lowers the strength of stainless steel is removed from the produced hot metal, and then a tabular slab is produced through casting of the molten steel. Slag is generated out of the hot metal during the decarburization. The generated slag is made to solidify and is removed from the molten steel, before casting, because slag adversely affects the quality of stainless steel products. The removed slag contains components of valuable metals such as oxides of chromium (Cr), which may be constituent components of stainless steel. Attempts have accordingly been made to reuse the valuable metals in slag.

For instance, slag solidification is accomplished through addition of calcium oxide (CaO) to slag in molten steel at the terminal phase of a decarburization process, as disclosed in Patent Document 1. Ordinarily, reducing agents such as silicon (Si) and aluminum alloy are added to slag, before addition of calcium oxide, in order to recover chromium through reduction of chromium oxides contained in the slag. Patent Document 2 discloses a technique where solidified slag after being removed from molten steel is returned to a furnace (melting furnace) for generating hot metal from starting materials for making stainless steel and then the slag is melted together with the starting materials for making stainless steel, and as a result, valuable metals contained in the slag are reused as stainless steel starting materials.

### PRIOR ART DOCUMENT

### PATENT DOCUMENT

Patent Document 1: Japanese Patent Application Laid Open No. 64-36717
Patent Document 2: Japanese Patent Application Laid Open No. 2010-261062

### SUMMARY OF THE INVENTION

### PROBLEM TO BE SOLVED BY THE INVENTION

In the slag solidification technique disclosed in Patent Document 1, however, the additive amount of calcium oxide is substantial, and hence the amount of slag after solidification is likewise significant. In the technique disclosed in Patent Document 2, returning large amounts of slag to a melting furnace entails also returning significant amounts of impurities contained in the slag, which cannot be used for steelmaking. This lowers the production efficiency of stainless steel from the hot metal that is generated in the melting furnace, and, as a consequence, the amount of slag that can be returned to the melting furnace is limited. The excess slag that cannot be returned to the melting furnace increases in a case where slag solidified according to the solidification technique disclosed in Patent Document 1 is to be returned to the melting furnace in accordance with the technique disclosed in Patent Document 2. This excess slag must be disposed of after recovery, by some other means, of the valuable metals contained in the slag. This is problematic in that, as a result, costs increase as the amount of excess slag increases.

It is an object of the present invention, in order to solve the above problem, to provide a method for manufacturing stainless steel aimed at reducing the amount of slag that is to be disposed of.

### MEANS FOR SOLVING THE PROBLEM

In order to solve the above problem, the method for manufacturing stainless steel according to the present invention includes the steps of: generating hot metal through melting in a melting furnace a starting material for making stainless steel; generating chromium-containing molten steel through decarburization of the hot metal in a refining furnace; adding calcium carbonate to slag that is generated in the chromium-containing molten steel through the decarburization, without addition of a reducing agent, to solidify the slag; separating the solidified slag; and returning the separated slag to the melting furnace.

### ADVANTAGEOUS EFFECT OF THE INVENTION

The method for manufacturing stainless steel according to the present invention allows reducing the amount of slag that is to be disposed of.

### BRIEF DESCRIPTION OF THE DRAWINGS

Fig. 1 is a schematic diagram illustrating the flow of a stainless steel manufacturing process;
Fig. 2 is a schematic diagram illustrating the flow of a treatment process in a converter;
Fig. 3 is a diagram comparing the amounts of calcium carbonate and calcium oxide required for slag solidification; and
Fig. 4 is a diagram comparing the amount of slag mixed in crude stainless molten steel in a subsequent secondary refining process (vacuum degassing process) after slag solidification, between instances of solidification with calcium carbonate and solidification with calcium oxide.

### MODE FOR CARRYING OUT THE INVENTION

### Embodiment

A method for manufacturing stainless steel in an embodiment of the present invention will be explained next with reference to the accompanying drawings.

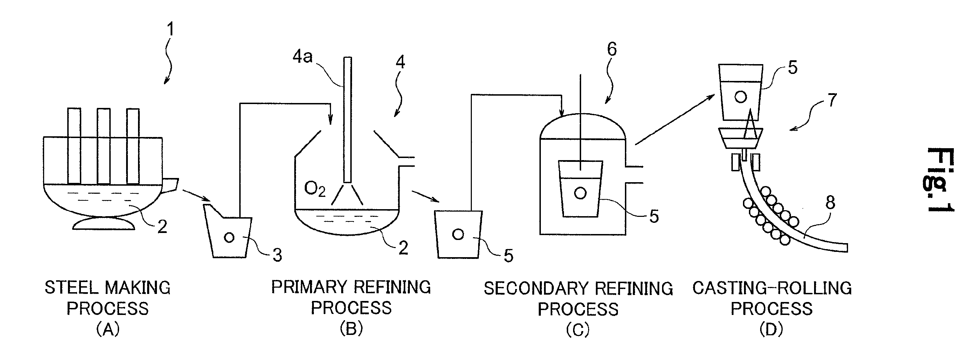

With reference to Fig. 1, stainless steel manufacture can be accomplished by sequentially performing a steelmaking process (A), a primary refining process (B), a secondary refining process (C) and a casting-rolling process (D).

In the steelmaking process (A), a starting material for making stainless steel is melted in an electric furnace 1, to generate hot metal 2, and the generated hot metal 2 is charged into a converter 4 by way of a hot metal ladle 3.

Here, the electric furnace 1 constitutes a melting furnace.

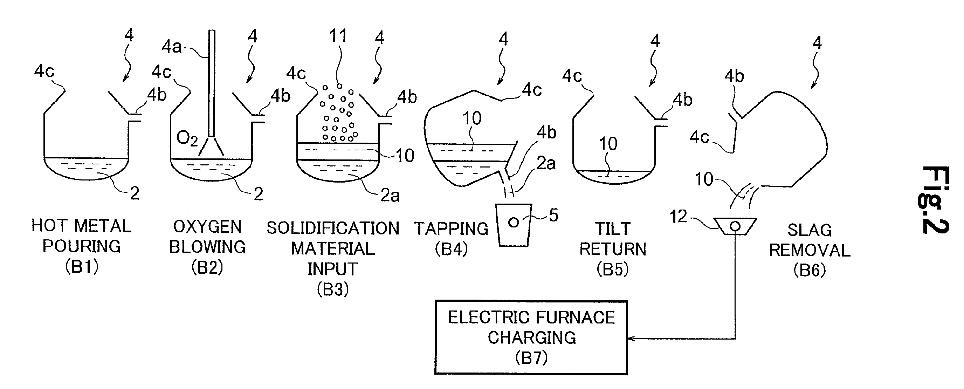

In the primary refining process (B), oxygen is blown into the converter 4 via a nozzle 4a, to perform thereby crude decarburization by removing carbon contained in the hot metal 2. Crude stainless molten steel 2a (see Fig. 2) is generated as a result of the crude decarburization. The generated crude stainless molten steel 2a is tapped into a ladle 5.

Here, the converter 4 constitutes a refining furnace.

In the secondary refining process (C), the crude stainless molten steel 2a is introduced, together with the ladle 5, into a vacuum degasser (VOD) 6, where finish-decarburization is performed. Pure stainless molten steel is generated through finish-decarburization of the crude stainless molten steel 2a.

In the casting-rolling process (D), the ladle 5 is removed from the vacuum degasser 6 and is set in a continuous casting apparatus (CC) 7. The stainless molten steel is poured into a mold of the continuous casting apparatus 7, and a tabular stainless steel slab 8 is formed as a result. The formed slab 8 is hot-rolled or cold-rolled to yield hot-rolled or cold-rolled steel strip.

With reference to Fig. 2, the primary refining process (B) will be explained in more detail.

First, in a hot metal pouring process (B1), the hot metal 2 generated in the electric furnace 1 (see Fig. 1) is poured into the converter 4. Next, in an oxygen blowing process (B2), oxygen is blown onto the surface of the hot metal 2 in the converter 4 via the nozzle 4a, and as a result, the carbon contained in the hot metal 2 is oxidized and removed, i.e. the hot metal 2 is decarburized to generate the crude stainless molten steel 2a. Further, by blowing oxygen onto the surface of the hot metal 2, slag 10 forms on the surface of the generated crude stainless molten steel 2a. The hot metal 2 of stainless steel contains chromium (Cr), which is an oxidizable element, and chromium is also present in the crude stainless molten steel 2a. During oxygen blowing, some of the chromium contained in the hot metal 2 is oxidized into chromium oxides to move into the slag 10. Accordingly, the slag 10 contains oxides of chromium, which are valuable metals.

Here, the crude stainless molten steel 2a constitutes chromium-containing molten steel.

Once the decarburization of the hot metal 2 is over, calcium carbonate (CaCO₃) 11 at ordinary temperatures, which is a solidification material, is added to the slag 10 on the surface of the crude stainless molten steel 2a, in a solidification material input process (B3). The calcium carbonate 11 is added in the form of lump-like calcium carbonate having a granularity range of from 10 mm to 50 mm.

The calcium carbonate 11 absorbs heat from the slag 10 to heat up to the decomposition temperature. The calcium carbonate 11 then undergoes thermal decomposition into calcium oxide (CaO) in solid form and gaseous carbon dioxide (CO₂), as indicated in Formula 1 below.

CaCO₃ (solid) → CaO (solid) + CO₂ (gas) (Formula 1)

Calcium carbonate absorbs 178.39 kilojoules of heat per mole (molar mass 100.087 g) (178.39 kJ/mol) in the thermal decomposition reaction of Formula 1. In the thermal decomposition reaction of Formula 1, 100 kg of calcium carbonate decomposes into about 56 kg of calcium oxide and about 44 kg of carbon dioxide.

The slag 10 is cooled as a result of the endothermic reaction of the calcium carbonate 11, and solidifies in a state where the slag 10 contains calcium oxide that is formed from the calcium carbonate 11. The amount of heat absorbed from the slag 10 is herein 2708 kilojoules per kg of calcium carbonate.

If calcium oxide at ordinary temperatures is used as the solidification material of the slag 10, the amount of heat absorbed from the slag 10 is 1125 kilojoules per kg of calcium oxide. That is, the endothermic capacity per kg of calcium carbonate, when the latter is used in slag solidification, is about 2.4 times the endothermic capacity per kg of calcium oxide.

In a tapping process (B4) after the solidification material input process (B3), the converter 4 is tilted and the crude stainless molten steel 2a alone is tapped into the ladle 5 via a tap hole 4b of the converter 4. The ladle 5 with the tapped crude stainless molten steel 2a moves onto the secondary refining process (C) of Fig. 1.

The converter 4, out of which the crude stainless molten steel 2a is tapped in the tapping process (B4), is returned from the tilted state to the original state in a subsequent tilt return process (B5), and is then tilted again in a slag removal process (B6), whereupon the solidified slag 10 inside the converter 4 is discharged into a vessel 12, via an opening 4c at the top, i.e. the slag is removed.

The removed slag 10 is returned to the electric furnace 1 (see Fig. 1) in a subsequent electric furnace charging process (B7), and is melted in the electric furnace 1, together with the starting material for making stainless steel that is charged into the electric furnace 1, in the steelmaking process (A) illustrated in Fig. 1. During melting in the electric furnace 1, the chromium oxides contained in the slag 10 are reduced to chromium by using carbon (C) or silicon (Si) as a reducing agent, which is contained in the ferrochromium (FeCr) and/or ferronickel (FeNi) in the starting material for making stainless steel, so that chromium is used as a stainless steel starting material. At the same time that the chromium oxides in the slag 10 are reduced, they oxidize carbon (C) and silicon (Si) in the starting materials for making stainless steel, and carbon and silicon are thus removed from the stainless steel.

The rationale for prescribing a granularity range of 10 mm to 50 mm for the calcium carbonate 11 that is added to the slag 10 of the crude stainless molten steel 2a in the solidification material input process (B3) is as follows.

First, if the granularity of the calcium carbonate 11 is larger than 50 mm, the surface area ratio (calcium carbonate surface area/slag surface area), which is the ratio of the surface area of the calcium carbonate 11 with respect to the surface area of the slag 10, is too small and accordingly, the mutual contact surface area becomes smaller, and the calcium carbonate 11 absorbs less heat from the slag 10. As a result, the reaction time between the calcium carbonate 11 and the slag 10, i.e. the time required for solidification of the slag 10, becomes longer, and stainless steel productivity decreases.

If the granularity of the calcium carbonate 11 is smaller than 10 mm, the surface area ratio (calcium carbonate surface area/slag surface area) is too large, and hence it becomes possible to shorten the reaction time between the calcium carbonate 11 and the slag 10. In this case, however, the granularity of the calcium carbonate 11 is excessively small, and hence the calcium carbonate 11 just stays at the surface of the slag 10 and fails to react sufficiently with the latter, and/or the updraft of carbon dioxide that is generated out of the calcium carbonate 11 through thermal decomposition drives the calcium carbonate 11 out of the converter 4, so that, as a result, the slag 10 fails to be sufficiently cooled and solidified.

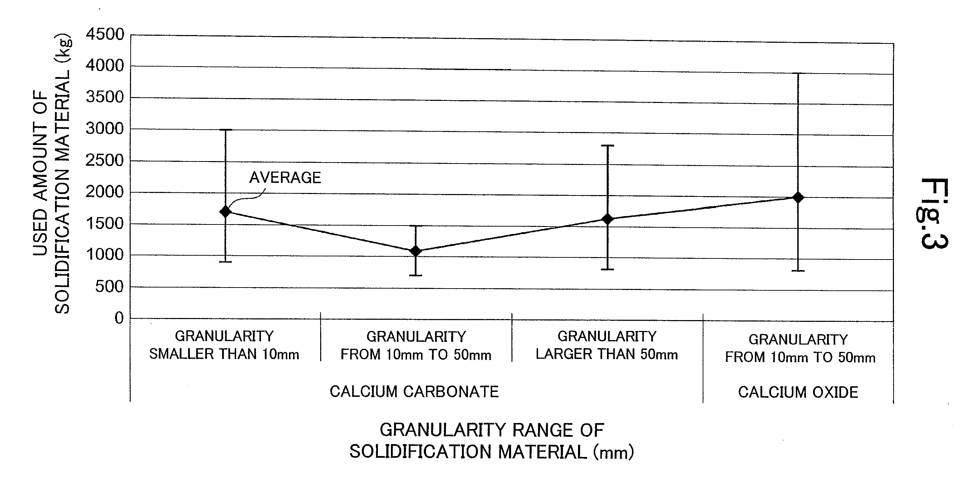

Fig. 3 illustrates data on the amount (mass) of calcium carbonate and calcium oxide, which are solidification materials, required for solidification of the slag 10, with respect to an 80-ton mass of the hot metal 2 (see Fig. 2) that is discharged per one steelmaking charge in the electric furnace 1 (see Fig. 1). In Fig. 3, the abscissa axis represents respective type and granularity conditions of calcium carbonate and calcium oxide, which are solidification materials, and the ordinate axis represents the mass of calcium carbonate and calcium oxide that is used for solidifying the slag 10 of an 80-ton mass of the hot metal 2. The conditions corresponding to the measurement results in Fig. 3 are as given in Table 1 below. In Table 1, slag basicity denotes the ratio of the content (mass) of calcium oxide with respect to the content (mass) of silicon dioxide (SiO₂) in slag (calcium oxide content/silicon dioxide content). Slag fluidity decreases as slag basicity increases. The endpoint temperature is the temperature of the crude stainless molten steel 2a that is tapped into the ladle 5 out of the converter 4 in the tapping process (B4) (see Fig. 2).

**Table 1**

| Slag solidification material | Calcium carbonate | | | Calcium oxide |
|---|---|---|---|---|
| Granularity | <10 mm | 10-50 mm | >50 mm | 10-50 mm |
| Steel type | Chromium stainless steel | Chromium stainless steel | Chromium stainless steel | Chromium stainless steel |
| Molten steel amount (T) | 80 | 80 | 80 | 80 |
| Slag basicity (CaO/SiO₂) | 2.0 | 2.0 | 2.0 | 2.0 |
| Endpoint temperature (°C) | 1790 | 1793 | 1790 | 1789 |
| Solidification material input method | Batch input in solidification material input process (B3) | Batch input in solidification material input process (B3) | Batch input in solidification material input process (B3) | Batch input in solidification material input process (B3) |

According to Fig. 3, if using calcium carbonate having a granularity smaller than 10 mm, the mass of calcium carbonate required for solidifying the slag 10 ranges from about 900 to about 3000 kg, and takes on an average value of about 1700 kg. If using calcium carbonate having a granularity larger than 50 mm, the mass of calcium carbonate required for solidifying the slag 10 ranges from about 800 to about 2800 kg, and takes on an average value of about 1600 kg. If using calcium carbonate having a granularity ranging from 10 mm to 50 mm, the mass of calcium carbonate required for solidifying the slag 10 is kept within a range of about 700 to about 1500 kg, and takes on an average value of about 1100 kg. Accordingly, the mass of solidification material required for solidifying the slag of a 1-ton mass of the crude stainless molten steel 2a (see Fig. 2) ranges from about 11.3 to about 37.5 kg and takes on an average value of about 21.3 kg in the case of calcium carbonate having a granularity smaller than 10 mm; ranges from about 10 to about 35 kg and takes on an average value of about 20 kg in the case of calcium carbonate having a granularity larger than 50 mm; and ranges from about 8.8 to about 18.8 kg and takes on an average value of about 13.8 kg in the case of calcium carbonate having a granularity ranging from 10 mm to 50 mm. In a case where calcium carbonate is used as the solidification material, thus, the mass of slag 10 after solidification is significantly reduced when using calcium carbonate having a granularity ranging from 10 mm to 50 mm.

According to Fig. 3, the mass of calcium oxide required for solidifying the slag 10 ranges from about 800 to about 4000 kg and takes on an average value of about 2000 kg. Accordingly, the mass of calcium oxide required for solidifying the slag of a 1-ton mass of the crude stainless molten steel 2a (see Fig. 2) ranges from about 10 to about 50 kg, and takes on an average value of about 25 kg. The required amount of calcium carbonate is thus significantly smaller than that of calcium oxide. Accordingly, the amount of slag 10 after solidification is significantly reduced by using calcium carbonate, instead of calcium oxide, as the solidification material.

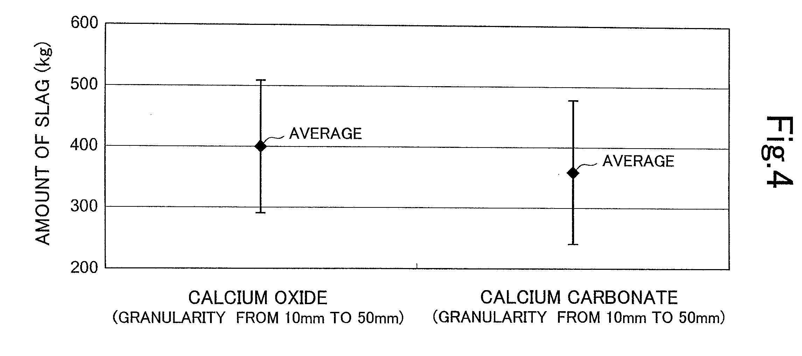

Fig. 4 illustrates the respective amount of slag mixed in the crude stainless molten steel 2a (see Fig. 2) in the vacuum degasser 6 (see Fig. 1) per one steelmaking charge, in cases where calcium oxide and the calcium carbonate 11, which have respective granularity ranging from 10 mm to 50 mm, are used as the solidification material of the slag 10 in the converter 4 (see Fig. 1). Fig. 4 shows that, in a case where calcium oxide is used in the solidification treatment of the slag 10 in Fig. 3, about 290 to about 510 kg, average about 400 kg, of the slag 10 per one steelmaking charge remains unsolidified in the converter 4, and is mixed in the crude stainless molten steel 2a that is transferred to the vacuum degasser 6. In a case where the calcium carbonate 11 is used for solidification, by contrast, about 240 to about 480 kg, average about 360 kg of the slag 10 per one charge remains unsolidified in the converter 4 and is mixed in the crude stainless molten steel 2a that is transferred to the vacuum degasser 6. The above indicates that solidifying the slag 10 using calcium carbonate 11 affords a higher slag solidification rate than using calcium oxide.

In the electric furnace 1 (see Fig. 1), where an 80-ton mass of the hot metal 2 is generated per steelmaking charge, the volume of the starting materials to be charged increases, and the steel bath volume in the electric furnace is exceeded, when the slag 10 is mixed in an amount of more than 55 kg per 1-ton mass of the mixture of the returned slag 10 and the starting materials for making stainless steel, and it becomes difficult as a result to secure an 80-ton mass of the hot metal. It may therefore be impossible, in some instances, to return to the electric furnace 1 all the slag 10 after solidification, if using calcium oxide, in which case the amount required for solidifying the slag 10 of a 1-ton mass of hot metal 2 ranges from about 10 to about 50 kg. For calcium carbonate, by contrast, the amount required for solidifying the slag 10 of a 1-ton mass of the hot metal 2 ranges from about 8.8 to about 18.8 kg (when granularity ranges from 10 mm to 50 mm). Thus, the calcium carbonate required for solidifying the slag 10 of a 1-ton mass of the hot metal 2 according to the thermal decomposition reaction of Formula 1 above drops to about 4.9 to about 10.5 kg of calcium oxide, and hence all the slag 10 after solidification can be returned to the electric furnace 1.

As described above, the method for manufacturing stainless steel according to the present invention includes the steps of: generating hot metal 2 through melting of a starting material for making stainless steel, in the electric furnace 1; generating crude stainless molten steel 2a through decarburization of the hot metal 2 in the converter 4; adding calcium carbonate 11 to slag 10 that is generated in the crude stainless molten steel 2a through decarburization, without addition of a reducing agent, to solidify the slag 10; separating the solidified slag 10; and returning the separated slag 10 to the electric furnace 1.

The calcium carbonate 11 has higher cooling capability than calcium oxide or the like, and can cool and solidify the slag 10 in smaller amounts. Therefore, this allows a reduction in the amount of slag 10 that is generated after solidification.

By returning the slag 10 after solidification to the electric furnace 1, without reduction through addition of a reducing agent, the melting heat in the electric furnace 1 can be exploited by the chromium oxides contained in the slag 10 to be reduced to chromium through reaction with carbon or silicon contained in the starting materials for making stainless steel, so that the chromium is reused as a stainless steel starting material. This allows the suppression of increases in the amount of slag 10 that is generated due to a reducing agent.

Further, by returning the slag 10 after solidification to the electric furnace 1 and reusing the slag 10 as a stainless steel starting material, the amount of slag 10, which requires a separate recovery process for chromium that is a valuable metal and is to be disposed of after the recovery, can be reduced.

Accordingly, the amount of slag 10, from which valuable metals are recovered in a separate process, and which is to be disposed of, can be lowered by reducing the generation amount of slag 10 after solidification and reusing the slag 10 after solidification for the production of stainless steel.

As a result of the above, it becomes possible to reduce the recovery cost of valuable metals from the slag 10, and to reduce the disposal cost of the slag 10 after recovery. The amount of slag 10 that is returned to the electric furnace 1 can be lowered by reducing the amount of slag 10 after solidification. In turn, this allows an increase in the charging amount of starting material for making stainless steel into the electric furnace 1 and, thereby, increasing the amount of stainless steel that is produced per steelmaking charge, while reducing production costs. Costs can also be reduced by returning the slag 10 after solidification to the electric furnace 1, so no process need be carried out in order to melt the slag 10.

The slag 10 that is generated in the converter 4 contains chromium oxide (Cr₂O₃) of a high melting point, as one chromium oxide. In a case where the chromium oxide is reduced in the converter 4 in order to recover chromium, the slag 10 requires the use of a reducing agent containing silicon such as ferrosilicon, etc. This entails higher costs. By contrast, as, in the electric furnace 1, carbon or silicon contained in the ferrochromium or ferronickel in the starting material for making stainless steel can be exploited as reducing agents, it becomes possible to lower the cost of recovering valuable metals from the slag 10.

If the chromium oxide is reduced in the converter 4, a reducing agent such as ferrosilicon is charged when the crude stainless molten steel 2a is in a state after decarburization and at high temperature (about 1700 to about 1800°C). The basicity in the slag 10 (calcium oxide content/silicon dioxide content) drops as a result. Low basicity translates into increased solubility of magnesium oxide (MgO), which is a constituent component of the furnace body of the converter 4, to elute the magnesium oxide so that the durability of the converter 4 is lessened. By contrast, as the temperature of the hot metal 2 that is generated in the electric furnace 1 is comparatively low, of up to about 1600°C, drops in the basicity in the slag 10 that is returned to the electric furnace 1 are suppressed, and therefore, loss of durability of the furnace body of the electric furnace 1 is likewise suppressed.

The calcium carbonate takes the form of lumps having a granularity range from 10 mm to 50 mm. As a result, the contact surface area between the added calcium carbonate 11 and the slag 10 is secured and the calcium carbonate 11 can reach the interior of the slag 10, and therefore, the added calcium carbonate 11 can sufficiently cool and solidify the entirety of the slag 10.

## Claims

1. A method for manufacturing stainless steel, comprising the steps of:
generating hot metal through melting in a melting furnace a starting material for making stainless steel;
generating chromium-containing molten steel through decarburization of the hot metal in a refining furnace;
adding calcium carbonate to slag that is generated in the chromium-containing molten steel through the decarburization, without addition of a reducing agent, to solidify the slag;
separating the solidified slag; and
returning the separated slag to the melting furnace.

2. The method for manufacturing stainless steel according to claim 1, wherein the calcium carbonate is in the form of lumps having a granularity range of from 10 mm to 50 mm.
